# EUROPEAN PATENT APPLICATION

(11) **EP 4 609 747 A1**
(43) Date of publication of application: **03.09.2025**
(21) Application number: 23900573.9
(22) Date of filing: 01.12.2023
(51) Int. Cl.: A44C 27/00, A44C 3/00, B21D 43/00, B21D 53/00

(54) **CAN MEMBER LOADING TOOL, CAN MEMBER, CAN MEMBER UNIT, AND CAN MEMBER LOADING METHOD**

(30) Priority: 07.12.2022 JP 2022195810
(71) Applicant: BROTHER KOGYO KABUSHIKI KAISHA, Nagoya-shi, Aichi 467-8561 (JP)
(72) Inventor: KOGA Yuji, Nagoya-shi, Aichi 467-8562 (JP); TAKEUCHI Kenji, Nagoya-shi, Aichi 467-8562 (JP); TSUJISHITA Yoji, Nagoya-shi, Aichi 467-8562 (JP)
(74) Representative: Prüfer & Partner mbB Patentanwälte · Rechtsanwälte
(86) International application number: PCT/JP2023/043081
(87) International publication number: WO 2024/122458

(57) **Abstract**

Provided is a button member loading tool with which a button product member can easily be loaded into a stocker. This button member loading tool 80 comprises: an extending part 84 that extends along a first direction; and a plurality of support parts 81 that extend from the extending part 84 in a second direction intersecting the first direction and are aligned with gaps therebetween along the first direction, and that are for supporting button members in the gaps.

## Description

### TECHNICAL FIELD

The present invention relates to a button member loading jig, a button member, a button member unit, and a button member loading method.

### BACKGROUND ART

As a button product manufacturing device using a related button member loading jig, for example, a button product producing device of Patent Literature 1 below is known. This button product producing device produces a button product by covering a front lid with a film on which a predetermined image is printed and sandwiching a portion of the film protruding from the front lid between the front lid and a back lid.

### CITATION LIST

### PATENT LITERATURE

Patent Literature 1: JP2019-136210A

### SUMMARY OF INVENTION

### TECHNICAL PROBLEM

In the related art, the front lid and the back lid are alternately laminated and stored in a cylindrical stocker. Therefore, there is a problem that members such as the front lid and the back lid need to be loaded into the stocker.

Therefore, an object of the present invention is to provide a button member loading jig, a button member, a button member unit, and a button member loading method that enable button product members to be easily loaded into a stocker.

### SOLUTION TO PROBLEM

A button member loading jig according to the present invention includes: an extending portion extending along a first direction; and a plurality of support portions each protruding from the extending portion in a second direction intersecting the first direction, aligned at intervals between the plurality of support portions along the first direction, and configured to support a button member at the intervals.

### ADVANTAGEOUS EFFECTS OF INVENTION

According to the present invention, it is possible to provide a button member loading jig, a button member, a button member unit, and a button member loading method that enable button product members to be easily loaded into a stocker.

### BRIEF DESCRIPTION OF DRAWINGS

[FIG. 1] FIG. 1 is a perspective view illustrating a button product manufacturing device according to the present embodiment.
[FIG. 2] FIG. 2 is a top view of the button product manufacturing device.
[FIG. 3] FIG. 3 is a block diagram illustrating a configuration of a control system of the button product manufacturing device.
[FIG. 4A] FIG. 4A is a top view of a printing medium.
[FIG. 4B] FIG. 4B is a top view of a white film.
[FIG. 5A] FIG. 5A illustrates perspective views of a front member and a back member.
[FIG. 5B] FIG. 5B is a cross-sectional view of a button product.
[FIG. 6A] FIG. 6A is a perspective view of a button member unit.
[FIG. 6B] FIG. 6B is a perspective view of the button member unit.
[FIG. 7A] FIG. 7A is a view of the button member unit viewed from a mounting surface side.
[FIG. 7B] FIG. 7B is a cross-sectional view of the button member unit orthogonal to the mounting surface.
[FIG. 8A] FIG. 8A is a perspective view of the back member provided with a hook on the mounting surface.
[FIG. 8B] FIG. 8B is a perspective view of the back member provided with the hook on the mounting surface.
[FIG. 9A] FIG. 9A is a perspective view of a button member loading jig.
[FIG. 9B] FIG. 9B is a perspective view of the loading jig in which an interval between support portions is filled with the back member as the button member.
[FIG. 10A] FIG. 10A is a perspective view of the loading jig in which a front end of the support portion faces a facing surface of a third portion.
[FIG. 10B] FIG. 10B is a perspective view of the loading jig in which the front end of the support portion faces an opposite surface of the third portion.
[FIG. 11A] FIG. 11A is a perspective view of the loading jig in which the interval between the support portions is filled with the back member with the mounting surface facing downward.
[FIG. 11B] FIG. 11B is a perspective view of the loading jig in which the interval between the support portions is filled with the back member with the mounting surface facing upward.
[FIG. 12] FIG. 12 is a perspective view of the loading jig that is disposed above a back member stocker and in which the interval between the support portions is filled with the back member.
[FIG. 13] FIG. 13 is a perspective view of the loading jig in which the back member and the support portion supporting the back member are inserted into the back member stocker.
[FIG. 14] FIG. 14 is a perspective view of the loading jig with the support portion removed from the back member stocker.
[FIG. 15] FIG. 15 is a perspective view illustrating the back member stocker and a back member slider.
[FIG. 16] FIG. 16 is a rear view illustrating a part of the back member stocker and the back member slider.

### DESCRIPTION OF EMBODIMENTS

### <button product Manufacturing Device>

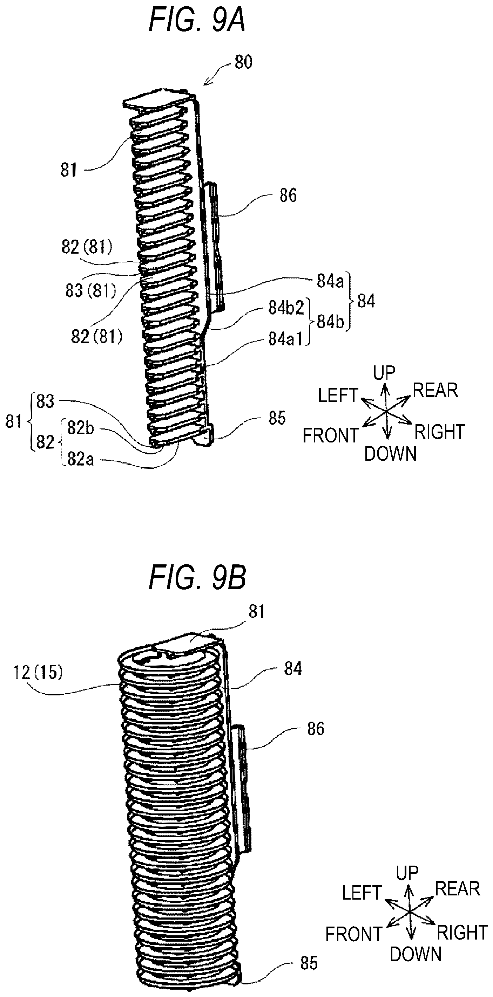

Hereinafter, a button product manufacturing device 100 using a button member loading jig 80 (FIG. 9A) according to an embodiment of the present invention will be described with reference to the drawings. The button member loading jig 80 described below is merely an embodiment of the present invention. Accordingly, the present invention is not limited to the following embodiment, and can be added, deleted, or modified without departing from the scope of the present invention.

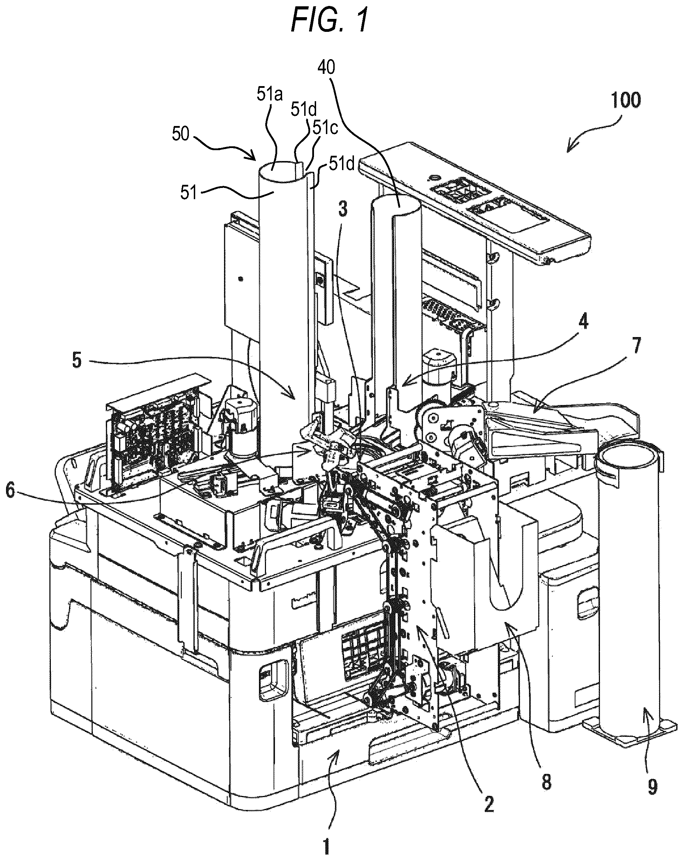

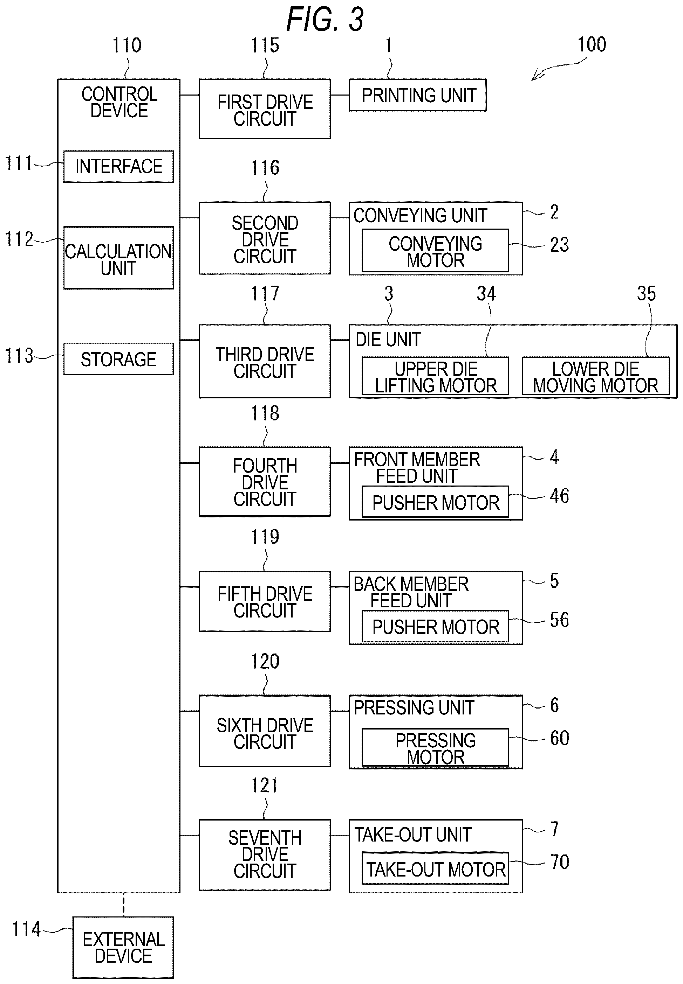

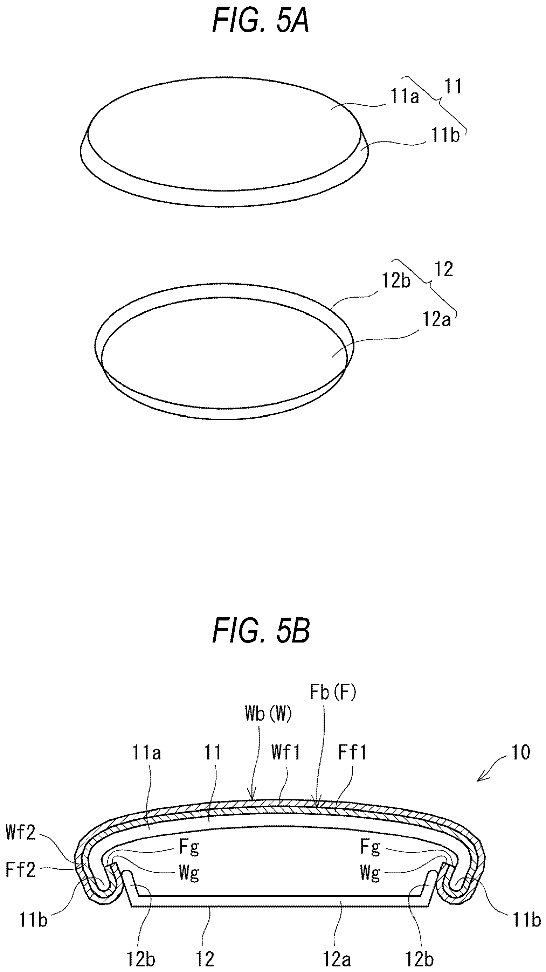

As illustrated in the example of FIGs. 1 and 5B, the button product manufacturing device 100 is a device configured to manufacture a button product 10 by connecting (caulking) a front member 11 on which a white film F and a printing medium W are laminated and a back member 12. The button product manufacturing device 100 includes a printing unit 1, a conveying unit 2, a die unit 3, a front member feed unit 4, a back member feed unit 5, a pressing unit 6, a take-out unit 7, a collection box 8, a button product container 9, and a control device 110 (FIG. 3).

As illustrated in the example of FIGs. 5A and 5B, the button product 10 is, for example, a button badge, and is manufactured by the front member 11, the back member 12, the white film F, and the printing medium W. The front member 11 and the back member 12 are formed of a magnetic material such as a tin-plated steel plate. The front member 11 includes a front plate portion 11a having a circular shape when viewed from above, and an annular front edge portion 11b protruding downward from an outer peripheral edge of the front plate portion 11a. The back member 12 includes a back plate portion 12a having a circular shape when viewed from above, and an annular back edge portion 12b protruding upward from an outer peripheral edge of the back plate portion 12a. Details of the back member 12 will be described later.

A cover portion Fb of the white film F is disposed on a front surface of the front member 11, and a cover portion Wb of the printing medium W is disposed on the white film F. Of the cover portions Wb and Fb, a portion protruding from a front surface of the front plate portion 11a is bent downward from the outer peripheral edge of the front plate portion 11a to cover a front surface of the front edge portion 11b, and a portion protruding from the front surface of the front edge portion 11b is bent upward from a lower end of the front edge portion 11b to be sandwiched between a back surface of the front edge portion 11b and the back edge portion 12b of the back member 12. Then, the button product 10 is manufactured by deforming (for example, caulking) at least one of the front member 11 and the back member 12 in a state in which the cover portions Wb and Fb are sandwiched between the front edge portion 11b and the back edge portion 12b facing each other. The front member 11 may be covered with only the printing medium W without using the white film F in the button product 10.

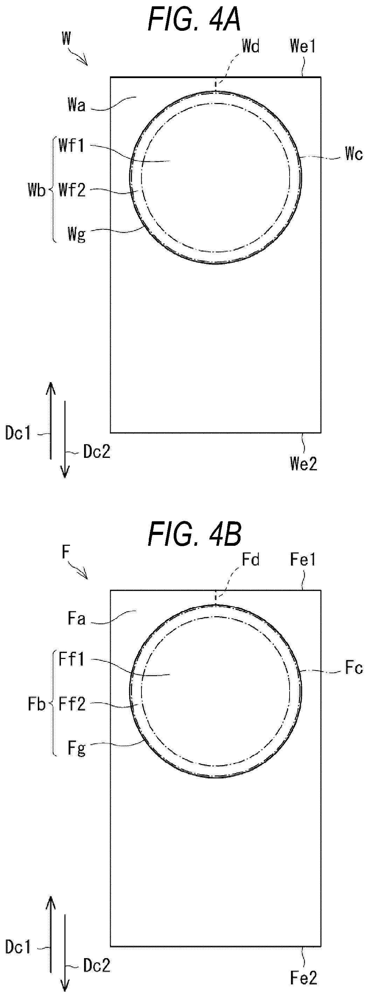

As illustrated in the example of FIG. 4A, the printing medium W is a rectangular transparent sheet. The printing medium W has a downstream end We1 and an upstream end We2 in a first conveying direction Dc1 when being conveyed toward the die unit 3 by the conveying unit 2. The printing medium W includes the cover portion Wb covering the front member 11, a remaining portion Wa different from the cover portion Wb, a coupling portion Wc coupling the cover portion Wb and the remaining portion Wa, and a linear weak portion Wd linearly extending from the coupling portion Wc to the downstream end We1. As illustrated in the examples of FIGs. 4A and 5B, the cover portion Wb includes a first front portion Wf1 covering the front surface of the front plate portion 11a of the front member 11, a second front portion Wf2 covering the front surface of the front edge portion 11b, and a sandwiched portion Wg sandwiched between the back surface of the front edge portion 11b and the back edge portion 12b of the back member 12. The coupling portion Wc and the linear weak portion Wd are weak portions having lower strength than the cover portion Wb and the remaining portion Wa, such as perforations. The coupling portion Wc and the linear weak portion Wd are cut by conveying the remaining portion Wa in a second conveying direction Dc2 opposite to the first conveying direction Dc1 by the conveying unit 2 in a state in which the cover portion Wb is pressed against the die unit 3 by the pressing unit 6, and the cover portion Wb and the remaining portion Wa are separated.

A configuration of the white film F is basically the same as the configuration of the printing medium W. As illustrated in the example of FIG. 4B, the white film F has the same size as the printing medium W and has a rectangular shape. The white film F has a downstream end Fe1 and an upstream end Fe2 in the first conveying direction Dc1, the cover portion Fb, a remaining portion Fa, a coupling portion Fc, and a linear weak portion Fd. The downstream end Fe1 corresponds to the downstream end We1, the upstream end Fe2 corresponds to the upstream end We2, the cover portion Fb corresponds to the cover portion Wb, the remaining portion Fa corresponds to the remaining portion Wa, the coupling portion Fc corresponds to the coupling portion Wc, and the linear weak portion Fd corresponds to the linear weak portion Wd. A color of the white film F is not limited to white.

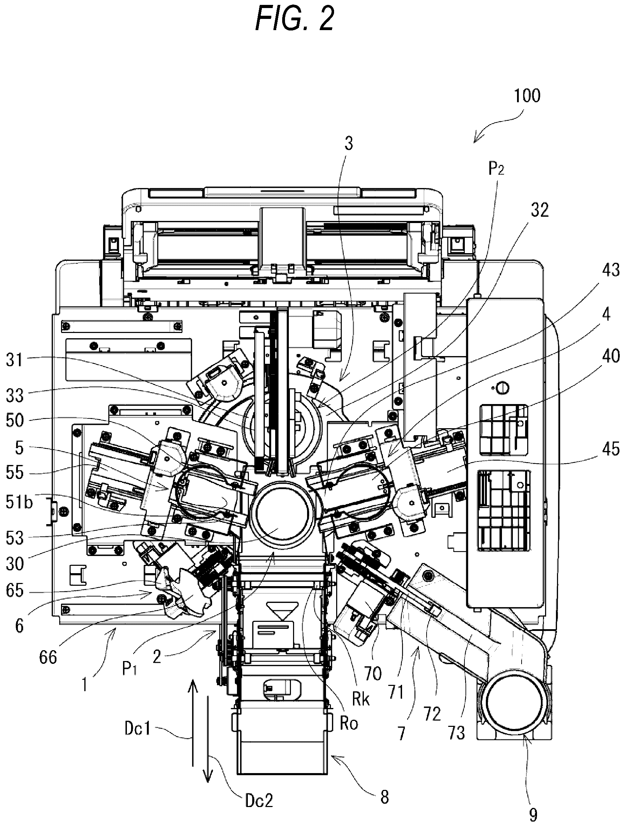

As illustrated in the examples of FIGs. 1 to 3, the control device 110 of the button product manufacturing device 100 includes an interface 111 that transmits and receives data to and from an external device 114, a calculation unit 112 such as a CPU that processes data, and a storage unit 113 such as a memory that stores data. The control device 110 is connected to each unit of the button product manufacturing device 100 via drive circuits 115 to 121, and controls the operation of each unit.

The printing unit 1 is a printer such as an inkjet printer, a laser printer, or a thermal printer, and prints an image on the cover portion Wb of the printing medium W. This image is inverted so as to become a normal image when a user views the image from a surface opposite to a surface on which the image is printed among surfaces of the printing medium W. As described above, the printing unit 1 prints an image on the printing medium W and supplies the printing medium W to the conveying unit 2, and supplies the white film F to the conveying unit 2 without printing an image on the white film F.

The front member feed unit 4 includes a front member stocker 40, a front member slider 43, a pusher 45, and a pusher motor 46. The front member stocker 40 has a cylindrical shape, and accommodates a plurality of the front members 11 in a laminated state in an up-down direction. The front member slider 43 extends from a position below the front member stocker 40 to a first lower die 30 disposed at a first die position P1 in the die unit 3. The pusher 45 reciprocates along the front member slider 43 by the pusher motor 46. Accordingly, the front member 11 is lowered from the front member stocker 40 onto the front member slider 43, is pushed toward the first lower die 30 by the pusher 45, and is supplied to the first lower die 30.

The back member feed unit 5 includes a back member stocker 50, a back member slider 53, a pusher 55, and a pusher motor 56. The back member stocker 50 includes a cylindrical tubular body 51, an upper opening 51a that is an opening provided at an upper end of the tubular body 51, an ejection port 51b through which the back member 12 is ejected, a slit 51c extending from the upper opening 51a along a central axis of the tubular body 51 and formed in the tubular body 51, and a pair of flanges 51d provided at both edges of the slit 51c. The back member 12 is loaded into the tubular body 51 from the upper opening 51a and ejected from the ejection port 51b. The back member slider 53 extends from a position below the back member stocker 50 to a second lower die 31 disposed at the first die position P1 in the die unit 3. The pusher 55 reciprocates along the back member slider 53 on an upper surface of the back member slider 53 by the pusher motor 56. The back member 12 is lowered from the back member stocker 50 onto the back member slider 53, is pushed toward the second lower die 31 by the pusher 55, and is supplied to the second lower die 31. Details of the back member stocker 50 will be described later.

The conveying unit 2 includes a conveying motor 23, a drive roller Rk, and a driven roller Ro. The drive roller Rk sandwiches the printing medium W and the white film F with the driven roller Ro, and is rotated forward by the conveying motor 23 to convey the printing medium W and the white film F along the first conveying direction Dc1 above the front member 11 supported by the first lower die 30. Meanwhile, the drive roller Rk is reversely rotated by the conveying motor 23 to convey the remaining portion Wa of the printing medium W and the remaining portion Fa of the white film F to the collection box 8 along the second conveying direction Dc2. The remaining portions Wa and Fa are collected in the collection box 8 as discarded portions.

The pressing unit 6 includes a pressing motor 60, a remaining portion depressing head 65, and a pressing head 66. The remaining portion depressing head 65 and the pressing head 66 press the printing medium W against the front member 11 by the pressing motor 60. In this state, when the remaining portion Wa of the printing medium W is conveyed in the second conveying direction Dc2 by the conveying unit 2, the coupling portion Wc and the linear weak portion Wd of the printing medium W are cut, and the cover portion Wb and the remaining portion Wa are separated. The cover portion Wb remains above the front member 11, and the remaining portion Wa is conveyed to and collected in the collection box 8. Similarly to the printing medium W, the cover portion Fb and the remaining portion Fa of the white film F are separated, the cover portion Fb remains above the front member 11, and the remaining portion Fa is conveyed to and collected in the collection box 8.

The die unit 3 includes the first lower die 30 that supports the front member 11, the second lower die 31 that supports the back member 12, a rotation support table 32, an upper die lifting motor 34, a lower die moving motor 35, and an upper die 33. The rotation support table 32 pivots the first lower die 30 and the second lower die 31 by the lower die moving motor 35 to move the first lower die 30 and the second lower die 31 to a second die position P2 below the upper die 33 or the first die position P1 other than the second die position P2. The upper die 33 is lifted and lowered by the upper die lifting motor 34.

The first lower die 30 moves to the second die position P2 below the upper die 33 after the front member 11 is disposed at the first die position P1 and the cover portions Wb and Fb are disposed above the front member 11. The upper die 33 is lowered toward the first lower die 30 to press the cover portions Wb and Fb against the front member 11, and is then lifted to separate the front member 11 covered with the cover portions Wb and Fb from the first lower die 30. The second lower die 31 moves to the second die position P2 below the upper die 33 after the back member 12 is disposed at the first die position P1. The upper die 33 is lowered toward the second lower die 31 to caulk the front member 11 and the back member 12 so as to sandwich the sandwiched portions Wg and Fg of the cover portions Wb and Fb, thereby manufacturing the button product 10.

The take-out unit 7 includes a take-out motor 70, a swing arm 71, a magnet member 72, and a seat 73. The swing arm 71 has the magnet member 72 mounted on its front end, and is pivoted by the take-out motor 70 so that the magnet member 72 moves between the second lower die 31 and the seat 73. By pivoting the swing arm 71, the magnet member 72 adheres to the button product 10 supported by the second lower die 31, and then moves the button product 10 to the seat 73. The button product 10 slides down the seat 73 having a downward gradient into the button product container 9 and is stored in the button product container 9.

### <Back Member>

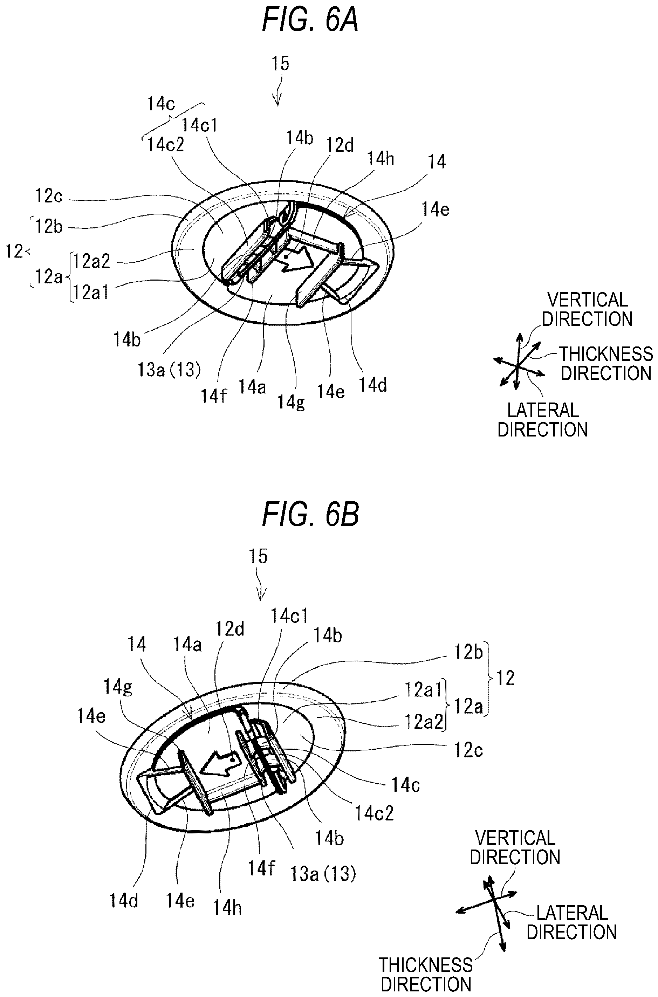

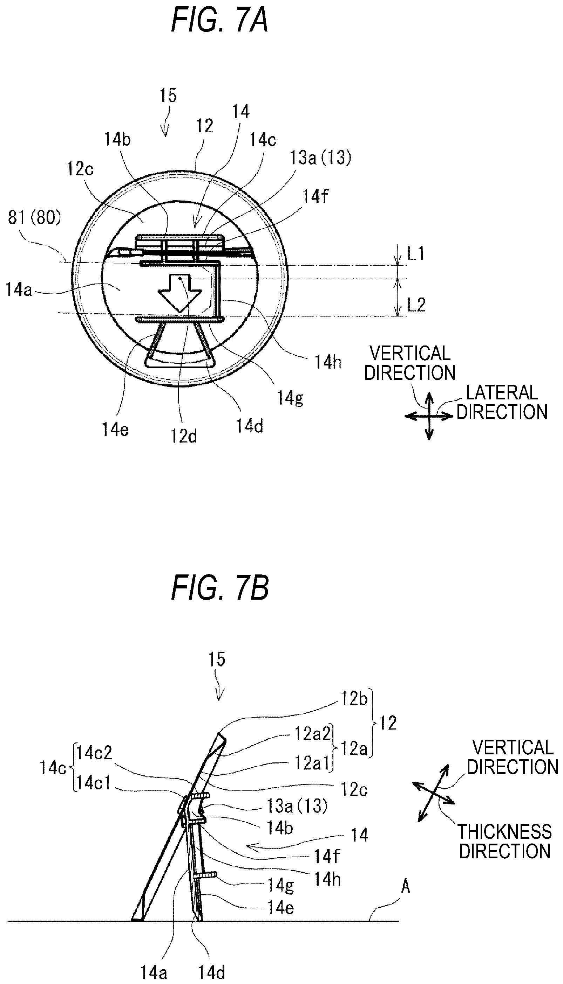

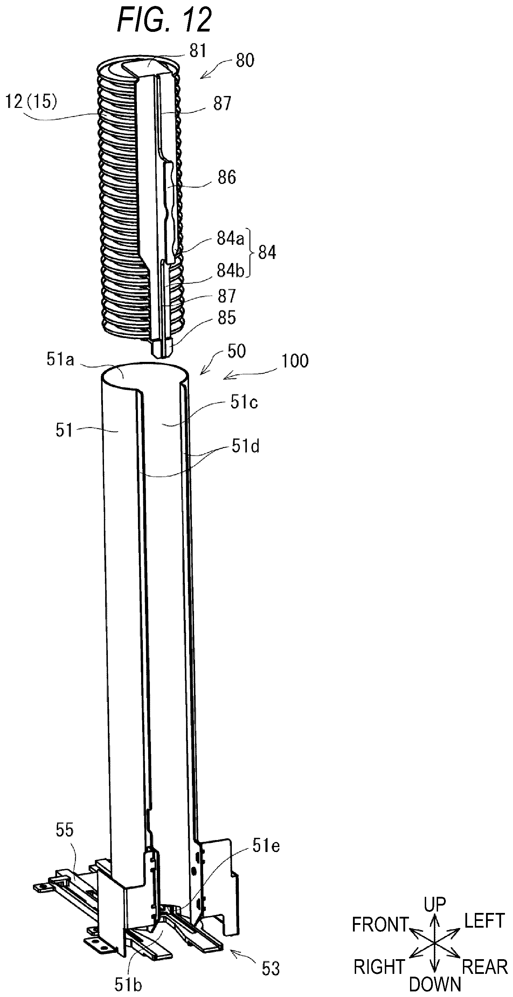

The back member 12 is supported by a support portion 81 of the button member loading jig 80 illustrated in the example of FIG. 12, and loaded into the back member stocker 50 of the button product manufacturing device 100. Therefore, as illustrated in the examples of FIGs. 6A to 7B, an accessory 14 for being supported by the support portion 81 is mounted on a mounting surface 12c of the back member 12 on which a fastener 13 is to be mounted, and the back member 12 constitutes a button member unit 15 together with the accessory 14. Directions parallel to the mounting surface 12c and intersecting (for example, orthogonal to) each other are referred to as a vertical direction and a lateral direction. A direction orthogonal (for example, orthogonal to) to the mounting surface 12c is referred to as a thickness direction. The arrangement of the back member 12 is not limited thereto. The back member 12 will be described as the button member, but the button member is not limited thereto, and may be, for example, the front member 11.

The back member 12 includes the back plate portion 12a having a circular shape when viewed along the thickness direction, and the annular back edge portion 12b protruding from the edge of the back plate portion 12a. For example, the back edge portion 12b has a base end connected to the edge of the back plate portion 12a and a front end having a diameter larger than a diameter of the base end. The back plate portion 12a has a circular flat area 12a1 at the center thereof and an annular inclined area 12a2 connected to an edge of the flat area 12a1 and the base end of the back edge portion 12b. The mounting surface 12c is provided on the flat area 12a1, and the mounting surface 12c is disposed concentrically with the back member 12. The inclined area 12a2 is inclined such that the front end of the back edge portion 12b is positioned on an extension surface of the flat area 12a1 in the thickness direction. Accordingly, a thickness of the back member 12 is a dimension between the flat area 12a1, the front end of the back edge portion 12b and the base end of the back edge portion 12b in the thickness direction.

The fastener 13 is a member for fastening the button product 10 to a fastening portion such as clothing or a bag. Hereinafter, a safety pin will be described as the fastener 13, but the fastener 13 is not limited thereto and may be a magnet or the like. A needle 13a of the safety pin serving as the fastener 13 is provided at an interval from the mounting surface 12c in the thickness direction and extends in the lateral direction.

The accessory 14 includes a base plate 14a. The base plate 14a has a shape obtained by cutting a circle having the same or substantially the same size as the mounting surface 12c by a straight line extending in the lateral direction. The base plate 14a has a flat plate shape, and one surface thereof faces the mounting surface 12c.

The accessory 14 includes fitting portions 14b. The fitting portion 14b has a flat plate shape orthogonal to the lateral direction. A base end of the fitting portion 14b in the thickness direction is connected to the base plate 14a. A V-shaped recess is provided at a front end of the fitting portion 14b. One or more (two in this embodiment) fitting portions 14b are fitted between the base plate 14a and the needle 13a of the fastener 13. Accordingly, the base plate 14a and the fitting portion 14b are sandwiched between the mounting surface 12c of the back member 12 and the needle 13a of the fastener 13 attached to the back member 12, whereby the accessory 14 is mounted on the back member 12. Since the needle 13a is fitted into the recess of the fitting portion 14b, the movement of the needle 13a is restricted by the fitting portion 14b, so that noise, damage to the back member 12, and the like caused by the movement of the needle 13a can be reduced. Further, since the plurality of fitting portions 14b are arranged at intervals in the lateral direction with a center of the needle 13a interposed therebetween, the needle 13a is stably supported by the fitting portions 14b at a plurality of positions.

The accessory 14 includes a pivoting support portion 14c and a grip portion 14d. The pivoting support portion 14c and the grip portion 14d are disposed at the center of the base plate 14a in the lateral direction. The pivoting support portion 14c is connected to one end of the base plate 14a in the vertical direction. The grip portion 14d is connected to the other end of the base plate 14a. The pivoting support portion 14c has a bent surface protruding in a direction away from the grip portion 14d in the vertical direction when viewed along the lateral direction. For example, the pivoting support portion 14c includes an inclined portion 14c1 connected to the base plate 14a, and an end portion 14c2 connected to the inclined portion 14c1. The inclined portion 14c1 and the end portion 14c2 have a flat plate shape extending in the lateral direction. When viewed along the lateral direction, the end portion 14c2 is provided perpendicular to the base plate 14a, and the inclined portion 14c1 is provided such that a smaller one of angles formed with the base plate 14a and a smaller one of angles formed with the end portion 14c2 are obtuse angles. The fitting portion 14b is disposed in a space surrounded by the pivoting support portion 14c, the base plate 14a, and a first portion 14f to be described later, and is connected to the pivoting support portion 14c, the base plate 14a, and a first portion 14f. Accordingly, the strength of the pivoting support portion 14c, the first portion 14f, and the fitting portion 14b is increased.

The grip portion 14d extends linearly in the lateral direction. The grip portion 14d is inclined in a direction away from the base plate 14a in the thickness direction as being away from the pivoting support portion 14c in the vertical direction, and faces the inclined area 12a2 of the back member 12. The grip portion 14d allows the accessory 14 to pivots with respect to the mounting surface 12c by being gripped by the user. When the accessory 14 pivots, in a state where the fitting portion 14b is recessed and comes into contact with the needle 13a and the pivoting support portion 14c is in contact with the mounting surface 12c, the grip portion 14d moves between a close position close to the mounting surface 12c and a remote position farther from the mounting surface 12c than the close position. The close position is a position of the grip portion 14d in a state where the base plate 14a is parallel to the mounting surface 12c and is in contact with the mounting surface 12c. The remote position is a position of the grip portion 14d in a state where the base plate 14a is inclined with respect to the mounting surface 12c and is separated from the mounting surface 12c, and is further separated from the mounting surface 12c than the close position in the thickness direction.

In a state where the fitting portion 14b is fitted between the mounting surface 12c and the needle 13a and the accessory 14 is mounted on the back member 12, as the grip portion 14d moves between the close position and the remote position, the accessory 14 pivots while being supported by the pivoting support portion 14c with respect to the mounting surface 12c. Here, in a case where the grip portion 14d is positioned at the close position, the inclined portion 14c1 of the pivoting support portion 14c is inclined with respect to the mounting surface 12c, and the end portion 14c2 is provided perpendicular to the mounting surface 12c. As the grip portion 14d moves from the close position to the remote position, the accessory 14 pivots, and the inclined portion 14c1 of the pivoting support portion 14c becomes parallel to the mounting surface 12c and comes into contact with the mounting surface 12c. Accordingly, the end of the back member 12 and the grip portion 14d come into contact with a contact surface A such as a floor and form leg portions that support the back member 12 with respect to the contact surface A in an upright state. Therefore, the accessory 14 functions as a stand for the button product 10 using the back member 12.

Further, as the accessory 14 pivots such that the grip portion 14d is further away from the mounting surface 12c in the thickness direction than the remote position, the end portion 14c2 of the pivoting support portion 14c becomes parallel to the mounting surface 12c and comes into contact with the mounting surface 12c. Accordingly, the fitting portion 14b is removed from between the mounting surface 12c and the needle 13a, and the accessory 14 is removed from the back member 12. In contrast, as the fitting portion 14b is fitted between the mounting surface 12c and the needle 13a while the accessory 14 pivots, the accessory 14 is attached to the back member 12. In this way, the accessory 14 is attachable to and detachable from the back member 12. Both ends of the grip portion 14d are connected to a pair of coupling units 14e. The coupling unit 14e protrudes from the base plate 14a in the thickness direction and extends between an end of the grip portion 14d in the lateral direction and a second portion 14g described later. Since the grip portion 14d is connected to the base plate 14a and the second portion 14g by the coupling unit 14e, the strength of the grip portion 14d is increased.

The accessory 14 includes the first portion 14f and the second portion 14g. The first portion 14f and the second portion 14g each have a flat plate shape extending in the lateral direction and protrude from the base plate 14a in the thickness direction. In the vertical direction, the pivoting support portion 14c, the first portion 14f, and the second portion 14g are aligned at intervals in this order. The first portion 14f and the second portion 14g are arranged apart from each other by a predetermined length in the vertical direction and are arranged parallel to each other. The first portion 14f and the second portion 14g sandwich a center 12d of the mounting surface 12c therebetween in the vertical direction, and the first portion 14f is closer to the center 12d than the second portion 14g. Therefore, a first interval L1 between the first portion 14f and the center 12d is smaller than a second interval L2 between the second portion 14g and the center 12d. Accordingly, when the support portion 81 having a width in the vertical direction equal to or smaller than the predetermined length is inserted between the first portion 14f and the second portion 14g, the back member 12 is disposed to be biased with respect to the support portion 81 in the vertical direction.

The accessory 14 includes a third portion 14h. The third portion 14h has a flat plate shape extending in the vertical direction and protrudes from the base plate 14a in the thickness direction. The first portion 14f and the second portion 14g are disposed at a center of the mounting surface 12c in the lateral direction, whereas the third portion 14h is disposed on one side in the lateral direction with respect to the center 12d of the mounting surface 12c. Accordingly, the third portion 14h is provided at a position away from the center 12d of the mounting surface 12c to one side in an intersecting direction intersecting a direction from the first portion 14f toward the second portion 14g. For example, the direction from the first portion 14f toward the second portion 14g is a direction intersecting (for example, orthogonal to) a direction in which the first portion 14f and the second portion 14g extend.

One end of the third portion 14h in the vertical direction is connected to one end of the first portion 14f in the lateral direction, and the other end of the third portion 14h is connected to one end of the second portion 14g in the lateral direction. Therefore, the first portion 14f, the second portion 14g, and the third portion 14h are arranged in a U shape. A space surrounded by the first portion 14f, the second portion 14g, and the third portion 14h is used as an insertion space into which the support portion 81 of the loading jig 80 is inserted in the lateral direction. One side of the insertion space in the lateral direction is closed by the third portion 14h, and the other side in the lateral direction is open. When the support portion 81 is inserted between the first portion 14f and the second portion 14g from the open portion, an extension line of an insertion path intersects the third portion 14h.

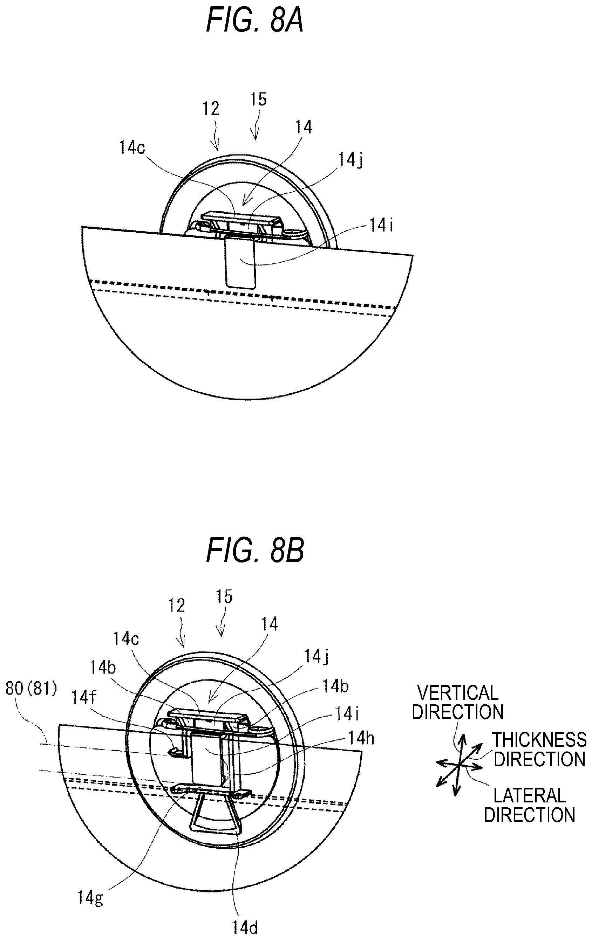

The accessory 14 may include a hook 14i as illustrated in the example of FIGs. 8A and 8B. In this case, the first portion 14f is L-shaped. The first portion 14f is connected to one fitting portion 14b of the two fitting portions 14b, extends in the vertical direction from the fitting portion 14b, is further bent, and extends in a direction away from the third portion 14h in the lateral direction. The portion extending in the lateral direction is disposed parallel to the second portion 14g at the predetermined length in the vertical direction. In a case where the back member 12 is supported by the support portion 81 of the loading jig 80, the support portion 81 is inserted between the first portion 14f and the second portion 14g arranged parallel to each other. The third portion 14h is connected to the other fitting portion 14b of the two fitting portions 14b, extends in the vertical direction from the fitting portion 14b, and is connected to the second portion 14g. In a case where the support portion 81 is inserted between the first portion 14f and the second portion 14g arranged parallel to each other, the extension line of the insertion path intersects with the third portion 14h.

The hook 14i is connected to the pivoting support portion 14c by a fixing portion 14j. One end of the fixing portion 14j is connected to the pivoting support portion 14c, extends in the vertical direction from the pivoting support portion 14c, and passes between the needle 13a of the fastener 13 and the mounting surface 12c. Then, the fixing portion 14j protrudes in a direction away from the mounting surface 12c in the thickness direction, and then the other end thereof is connected to the hook 14i. The hook 14i has a flat plate shape and extends in the vertical direction toward the second portion 14g in a state of being parallel to the mounting surface 12c. An end of the hook 14i does not reach the second portion 14g and is spaced apart from the second portion 14g in the vertical direction. The hook 14i is disposed between the first portion 14f and the third portion 14h in the lateral direction. Since the hook 14i is disposed farther from the mounting surface 12c than the first portion 14f and the third portion 14h in the thickness direction, an interval is provided between the hook 14i and the first portion 14f, the third portion 14h. When the fastening portion is inserted into the interval, the fastening portion is sandwiched between the hook 14i and the first portion 14f, the third portion 14h, and the button product 10 including the back member 12 is mounted on the fastening portion. In this case, the support portion 81 is inserted into an insertion space surrounded by the first portion 14f, the second portion 14g, the third portion 14h, the hook 14i, and the mounting surface 12c.

### <Button Member Loading Jig>

As illustrated in the examples of FIGs. 9A to 14, the button member loading jig 80 includes an extending portion 84 extending along a first direction, and a plurality of the support portions 81 each protruding from the extending portion 84 in a second direction intersecting the first direction, aligned at intervals along the first direction, and configured to support the back member 12 in the intervals. The button member loading jig 80 includes a handle 86 protruding from the extending portion 84 in the second direction. The extending portion 84 is positioned between the support portion 81 and the handle 86. Hereinafter, the button member loading jig 80 will be described as a jig for loading the plurality of back members 12 into the tubular back member stocker 50 in the button product manufacturing device 100 for manufacturing the button product 10 using the back member 12. However, the loading jig 80 is not limited thereto, and the back member 12 may be loaded into a member other than the back member stocker 50.

The first direction in which the extending portion 84 extends is referred to as the up-down direction. A direction in which the support portion 81 protrudes from the extending portion 84 in the second direction intersecting (for example, orthogonal to) the first direction is referred to as front, and a direction opposite to the front in the second direction is referred to as rear. That is, the second direction is referred to as a front-rear direction. A third direction intersecting (for example, orthogonal to) the first direction and the second direction is referred to as a left-right direction. However, the arrangement of the button member loading jig 80 is not limited thereto. Although the slit 51c and the ejection port 51b of the back member stocker 50 are positioned at a rear end of the tubular body 51 in accordance with the arrangement of the loading jig 80 in the following description, the arrangement of the back member stocker 50 is not limited thereto. Further, although the back member slider 53 extends rearward from a position below the back member stocker 50 in accordance with the arrangement of the back member stocker 50 in the following description, the arrangement of the back member slider 53 is not limited thereto.

Specifically, the loading jig 80 includes the extending portion 84 and the plurality of support portions 81 each protruding forward from the extending portion 84. The loading jig 80 is configured to load the back member 12 into the back member stocker 50 by supporting the back member 12 by the support portion 81, inserting the back member 12 into the tubular body 51 from the upper opening 51a in a state in which the extending portion 84 is sandwiched between the pair of flanges 51d, and then pulling out the support portion 81 to the outside of the tubular body 51 via the slit 51c. The extending portion 84 and the support portion 81 are integrally formed of resin such as polypropylene or polyethylene. Therefore, the loading jig 80 having a complicated shape can be easily manufactured.

The extending portion 84 has, for example, a substantially flat plate shape, extends in the up-down direction, and includes a first wide part 84a and a first narrow part 84b. In the left-right direction, a width of the first wide part 84a is constant in the up-down direction, is smaller than a width of the slit 51c in the back member stocker 50, and is equal to or smaller than a width of the pair of flanges 51d sandwiching the slit 51c therebetween. Therefore, when the back member 12 is loaded into the back member stocker 50, the extending portion 84 moves along the flange 51d between the pair of flanges 51d, which makes it easy to move the loading jig 80.

The first narrow part 84b is disposed further downward than the first wide part 84a, and an upper end of the first narrow part 84b is connected to a lower end of the first wide part 84a. In the left-right direction, the width of the first narrow part 84b is smaller than the width of the first wide part 84a. The first narrow part 84b includes a first constant width portion 84b1 and a first inclined portion 84b2. The first inclined portion 84b2 is disposed between the first wide part 84a and the first constant width portion 84b1 in the up-down direction, and has a width in the left-right direction that decreases from the first wide part 84a toward the first constant width portion 84b1. The width of the first constant width portion 84b1 in the left-right direction is constant in the up-down direction. When the back member 12 is loaded into the back member stocker 50, since the first narrow part 84b is inserted between the pair of flanges 51d before the first wide part 84a, the extending portion 84 is easily inserted between the pair of flanges 51d. Since a sharp corner is not provided in the extending portion 84 due to the first inclined portion 84b2, damage to the loading jig 80, the back member stocker 50, and the like due to a sharp corner can be reduced.

The extending portion 84 is connected to a protruding portion 85. An upper portion of the protruding portion 85 is connected to a lower end of the extending portion 84 and extends rearward from the extending portion 84, and a lower portion of the protruding portion 85 extends downward. The lower portion of the protruding portion 85 has a flat plate shape intersecting (for example, orthogonal to) the front-rear direction. In the up-down direction, a length of the protruding portion 85 is the same as or larger than a length of the ejection port 51b of the back member stocker 50. Therefore, the protruding portion 85 faces the ejection port 51b in a state where the extending portion 84 is inserted between the pair of flanges 51d. Since the support portion 81 is not provided on the protruding portion 85 and the support portion 81 is provided in the extending portion 84 above the protruding portion 85, the back member 12 supported by the support portion 81 is disposed above the ejection port 51b. Accordingly, when the support portion 81 is pulled out from the slit 51c, the back member 12 is not ejected from the ejection port 51b, is locked to both edges of the tubular body 51 sandwiching the slit 51c having a width smaller than the diameter of the back member 12, and remains inside the tubular body 51.

The handle 86 has a flat plate shape elongated in the up-down direction, is disposed at a center of the extending portion 84 in the up-down direction and the left-right direction, and protrudes rearward from a rear surface of the extending portion 84. A user can easily move the loading jig 80 by gripping the handle 86.

An upper end and a lower end of the handle 86 are connected to an extending rib 87. The extending rib 87 is disposed at the center of the extending portion 84 in the left-right direction and protrudes rearward from rear surfaces of the extending portion 84 and the protruding portion 85. In the front-rear direction, a length of the extending rib 87 is shorter than a length of the handle 86. The extending rib 87 extends from the upper end of the handle 86 to the upper end of the extending portion 84, and extends from the lower end of the handle 86 to the lower end of the protruding portion 85. In this way, since the extending rib 87 and the handle 86 extend in the up-down direction in the extending portion 84 and the protruding portion 85, the strength of the extending portion 84 and the protruding portion 85 can be improved.

The plurality of support portions 81 are provided on the extending portion 84 and are aligned in a row with regular intervals in the up-down direction. The support portion 81 protrudes forward from a front surface of the extending portion 84, and the support portion 81 includes a flat plate shape support plate 82 and a support rib 83. The support rib 83 protrudes downward from a lower surface of the support plate 82 at a center of the support plate 82 in the left-right direction, and extends in the front-rear direction over an entire length of the support plate 82. The strength of the support plate 82 can be improved by the support rib 83.

The interval between the support portions 81 adjacent to each other in the up-down direction is an interval between an upper surface of the support plate 82 and a lower surface of the support rib 83 facing the upper surface. The thickness of the back member 12 in the up-down direction is equal to or smaller than the interval between the support portions 81. In a case where the back member 12 is filled into the interval between the support portions 81, the back member 12 is sandwiched between the support plate 82 of the lower support portion 81 and the support rib 83 of the upper support portion 81, and is supported by the upper support portion 81 and the lower support portion 81. In this way, the back member 12 is easily supported by the support portion 81 of the loading jig 80 only by filling the back member 12 into the interval between the support portions 81.

The support plate 82 incudes a second wide part 82a and a second narrow part 82b. The second wide part 82a is closer to the extending portion 84 than is the second narrow part 82b in the front-rear direction, and a front end of the second wide part 82a is connected to a rear end of the second narrow part 82b. A width of the second wide part 82a in the left-right direction is equal to or smaller than the interval between the first portion 14f and the second portion 14g of the button member unit 15. The support portion 81 is inserted into the insertion space between the first portion 14f and the second portion 14g. A width of the second narrow part 82b in the left-right direction is smaller than a width of the second wide part 82a, and decreases toward the front. Therefore, when the back member 12 is filled into the interval between the support portions 81, the second narrow part 82b of the support portion 81 is inserted into the insertion space of the button member unit 15 before the second wide part 82a, which makes it easy to insert the support portion 81 into the insertion space.

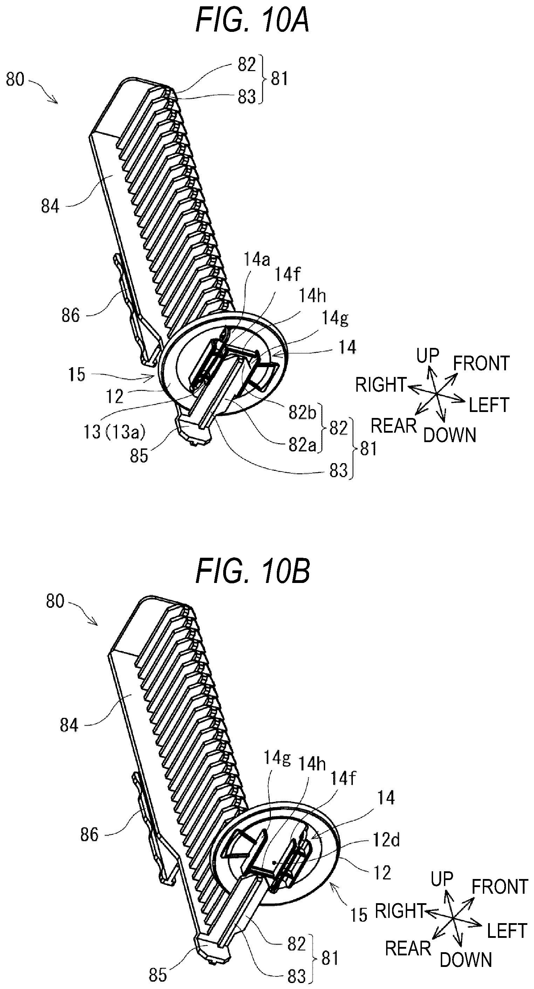

In this way, when the back member 12 is filled into the interval between the support portions 81, it is possible to prevent an error in the back member 12 in the front-rear direction. Specifically, in the example of FIG. 10A, the first portion 14f and the second portion 14g of the button member unit 15 are closer to the extending portion 84 than is the third portion 14h in the front-rear direction. In this case, when the support portion 81 is inserted into the insertion space from between the first portion 14f and the second portion 14g toward the third portion 14h, the support portion 81 is positioned between the first portion 14f and the second portion 14g, and the front end of the support portion 81 faces a facing surface of the third portion 14h. Meanwhile, as illustrated in the example of FIG. 10B, the first portion 14f and the second portion 14g are farther from the extending portion 84 than is the third portion 14h in the front-rear direction. In this case, the support portion 81 is not inserted into the insertion space between the first portion 14f and the second portion 14g, and the front end of the support portion 81 faces a surface opposite to the facing surface of the third portion 14h. The third portion 14h is provided at a position away from the center 12d of the mounting surface 12c of the back member 12 to one side in the front-rear direction, and the center 12d is disposed between the first portion 14f and the second portion 14g. Therefore, a length of the back member 12 protruding forward from the front end of the support portion 81 in the case illustrated in FIG. 10B is longer than a length of the back member 12 protruding forward from the front end of the support portion 81 in the case illustrated in FIG. 10A. This allows a user to prevent the back member 12 from being filled into the interval of the loading jig 80 with an error in the front-rear direction.

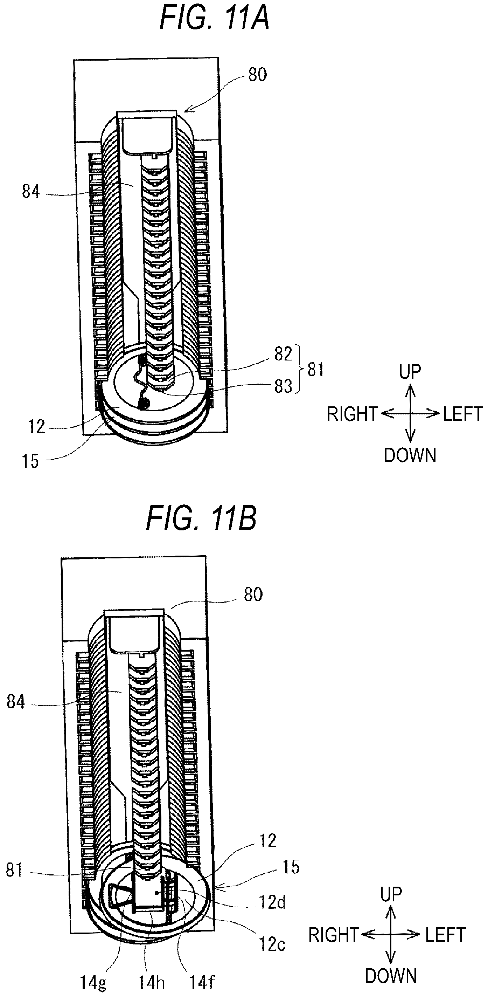

An error in the up-down direction of the back member 12 can be prevented when the back member 12 is filled into the interval between the support portions 81. Specifically, in the example of FIGs. 10A and 11A, the support portion 81 is inserted between the first portion 14f and the second portion 14g with the mounting surface 12c of the back member 12 facing downward. In contrast, in the example of FIG. 11B, the support portion 81 is inserted between the first portion 14f and the second portion 14g with the mounting surface 12c of the back member 12 facing upward. Since the first portion 14f is closer to the center 12d of the mounting surface 12c than the second portion 14g in the left-right direction, the back member 12 with the mounting surface 12c facing upward as illustrated in FIG. 11B is shifted to the left from the support portion 81 more than the back member 12 with the mounting surface 12c facing downward as illustrated in FIG. 11A. This allows a user to prevent the back member 12 from being filled into the interval of the loading jig 80 with an error in the up-down direction.

The length of the support portion 81 in the front-rear direction is shorter than an inner diameter of the tubular body 51 of the back member stocker 50. The width of the support portion 81 in the left-right direction is smaller than the width of the first wide part 84a of the extending portion 84 and the width of the slit 51c of the back member stocker 50, and is equal to or smaller than the width of the first narrow part 84b of the extending portion 84. In contrast, the diameter of the back member 12 supported by the support portion 81 is larger than the width of the slit 51c of the back member stocker 50. Therefore, when the back member 12 is loaded into the back member stocker 50, the extending portion 84 is disposed outside the tubular body 51, the support portion 81 protruding from the extending portion 84 passes through the slit 51c, and the back member 12 supported by the support portion 81 can be inserted into the tubular body 51. Then, the support portion 81 can be pulled out of the tubular body 51 through the slit 51c while leaving the back member 12 inside the tubular body 51.

Among the plurality of support portions 81, the support portion 81 at the upper end provided at the upper end of the extending portion 84 may have a shape different from those of the other support portions 81. That is, when the back member 12 is filled into the interval between the support portions 81, the other support portions 81 are inserted into the insertion space of the button member unit 15, but the support portion 81 at the upper end is not inserted into the insertion space. Therefore, the support portion 81 at the upper end may have a rectangular shape whose width in the left-right direction is constant in the front-rear direction, and the width in the left-right direction may be larger than the width of the insertion space between the first portion 14f and the second portion 14g. Also in this case, similarly to the other support portions 81, the support portion 81 at the upper end has a width smaller than the width of the slit 51c of the back member stocker 50, and thus can be pulled out from the slit 51c to the outside of the tubular body 51. Similarly to the other support portions 81, the support portion 81 at the upper end may include the second narrow part 82b.

### <Back Member Stocker>

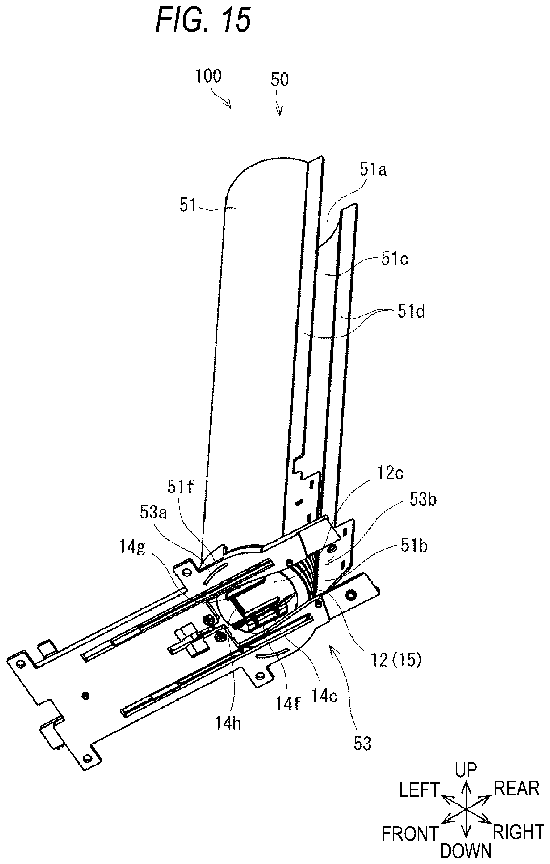

As illustrated in the examples of FIGs. 12 to 16, the back member stocker 50 includes the cylindrical tubular body 51 having a central axis extending in the up-down direction. The tubular body 51 includes the upper opening 51a, the ejection port 51b, the slit 51c, the pair of flanges 51d, and a pusher port 51e. The inner diameter of the tubular body 51 and a diameter of the upper opening 51a are slightly larger than the diameter of the back member 12. Therefore, the back member 12 is inserted into the tubular body 51 from the upper opening 51a such that the mounting surface 12c of the back member 12 is orthogonal to the central axis of the tubular body 51, and the plurality of back members 12 are laminated and accommodated in the tubular body 51.

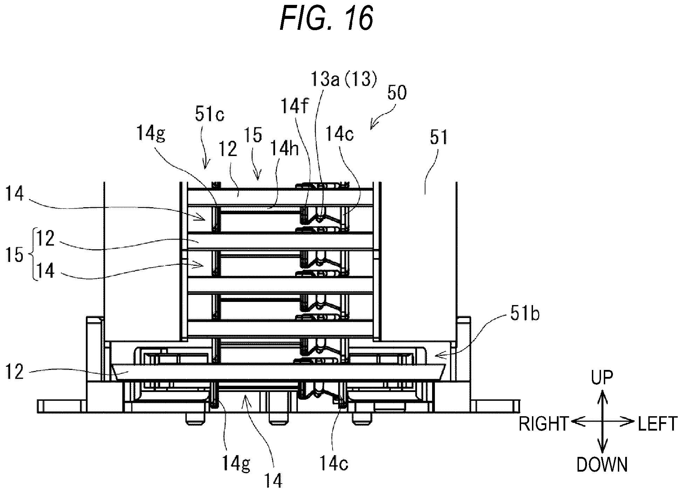

In the tubular body 51, as illustrated in the example of FIG. 16, a plurality of the button member units 15 are laminated such that the accessory 14 is positioned below the back member 12. Regarding the accessory 14, in the up-down direction, a dimension of the pivoting support portion 14c and a dimension of the second portion 14g are equal to each other and are larger than dimensions of other portions such as the first portion 14f and the third portion 14h. In the up-down direction, the dimension of the pivoting support portion 14c and the dimension of the second portion 14g are larger than a dimension of the fastener 13. Therefore, the pivoting support portion 14c and the second portion 14g of the upper button member unit 15 support the back member 12 of the upper button member unit 15 with respect to the lower back member 12. In this way, the accessory 14 forms a spacer between the back members 12 adjacent to each other in the up-down direction, and the back members 12 can be laminated parallel to each other inside the tubular body 51.

As illustrated in the examples of FIGs. 12 to 16, the slit 51c is an opening extending downward from the upper opening 51a at the rear end of the tubular body 51. The pair of flanges 51d protrude rearward from both edges of the tubular body 51 sandwiching the slit 51c therebetween. The pair of flanges 51d are provided parallel to each other and are provided over the entire length of the slit 51c in the up-down direction. Since the flange 51d is formed integrally with the tubular body 51, the strength of the tubular body 51 can be improved.

The ejection port 51b is an opening communicating with the slit 51c at the rear end of the tubular body 51. In the up-down direction, a height of the ejection port 51b is equal to or larger than a height of the back member 12, and in the left-right direction, the width of the ejection port 51b is equal to or larger than the diameter of the back member 12. The pusher port 51e is an opening facing the ejection port 51b at a front end of the tubular body 51. The pusher 55 is configured to reciprocate inside and outside the tubular body 51 through the pusher port 51e. The pusher 55 moves rearward and pushes the back member 12 inside the tubular body 51 so as to eject the back member 12 from the ejection port 51b. Meanwhile, the pusher 55 moves forward and retracts outside the tubular body 51, whereby the back member 12 is lowered between the ejection port 51b and the pusher port 51e inside the tubular body 51.

Attachment portions 51f are connected to the lower end of the tubular body 51. The attachment portion 51f extends downward from the tubular body 51 between the ejection port 51b and the pusher port 51e. By inserting the attachment portions 51f into attachment holes 53a of the back member slider 53, the tubular body 51 is attached to the back member slider 53 and disposed on the upper surface of the back member slider 53.

### <Button Member Loading Method>

The button member loading method is a method for loading, by using the loading jig 80, the plurality of back members 12 into the tubular back member stocker 50 in the button product manufacturing device 100 for manufacturing the button product 10 using the back member 12. The back member stocker 50 includes the cylindrical tubular body 51, the upper opening 51a provided at the upper end of the tubular body 51, and the slit 51c extending from the upper opening 51a along the central axis and formed in the tubular body 51. By inserting the loading jig 80 into the tubular body 51 from the upper opening 51a with one end of the extending portion 84 in the first direction leading, the loading jig 80 is brought into a state where the back member 12 supported by the support portion 81 is positioned inside the tubular body 51 and the extending portion 84 is positioned outside the tubular body 51. Then, by moving the loading jig 80 from this state so that the support portion 81 faces the outside of the tubular body 51 through the slit 51c, the loading jig 80 is taken out to the outside of the tubular body 51 and the back member 12 is left inside the tubular body 51 while.

Specifically, as illustrated in the example of FIG. 12, a user fills the plurality of back members 12 into the intervals of the loading jig 80, grips the handle 86 of the loading jig 80, and causes the first narrow part 84b to be lower than the first wide part 84a of the extending portion 84. Then, the user inserts the back member 12 supported by the support portion 81 into the tubular body 51 from the upper opening 51a such that the extending portion 84 is disposed outside the tubular body 51 and the support portion 81 protruding from the extending portion 84 passes through the slit 51c.

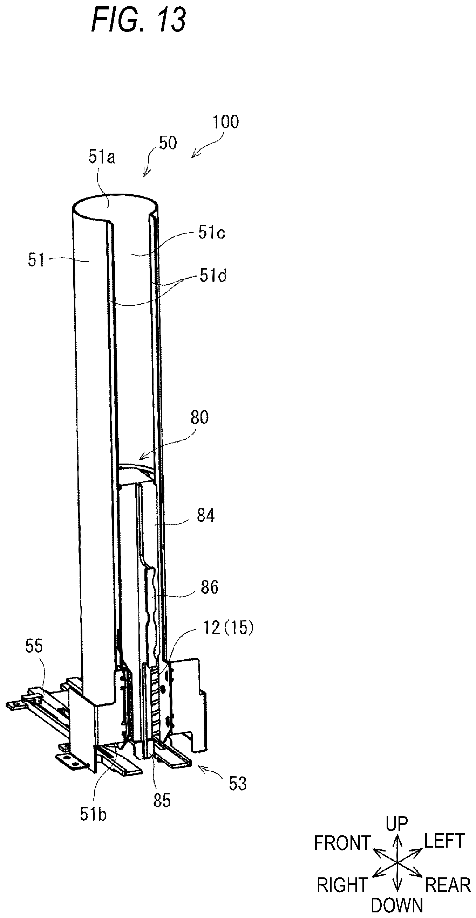

Then, as illustrated in the example of FIG. 13, the user places the extending portion 84 between the pair of flanges 51d, aligns the extending portion 84 with the slit 51c, and moves the loading jig 80 downward. Accordingly, the protruding portion 85 below the extending portion 84 comes into contact with the floor or the like, and the user stops the downward movement of the loading jig 80. Here, since the uppermost support portion 81 of the loading jig 80 is disposed below the upper end of the tubular body 51, the back member 12 supported by the support portion 81 is accommodated in the tubular body 51. The protruding portion 85 faces the ejection port 51b of the back member stocker 50. Since the support portion 81 is provided on the extending portion 84 disposed further upward than the protruding portion 85, the back member 12 supported by the support portion 81 is surrounded by the tubular body 51 above the ejection port 51b.

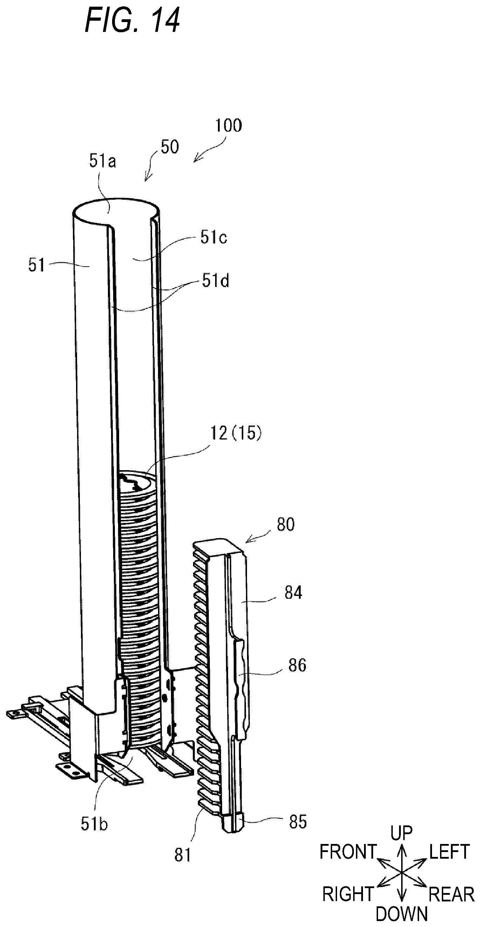

Here, as illustrated in the example of FIG. 14, when the user moves the loading jig 80 rearward, the support portion 81 is pulled out to the outside of the tubular body 51 through the slit 51c. Meanwhile, the back member 12 is locked to an inner surface of the tubular body 51 and is left inside the tubular body 51. In this way, the back member 12 is loaded into the back member stocker 50.

### REFERENCE SIGNS LIST

10: button product
12c: mounting surface
12d: center
13: fastener
14c2: end portion
14f: first portion
14g: second portion
14h: third portion
31: second lower die (lower die)
50: back member stocker (stocker)
51: tubular body
51c: slit
80: loading jig
81: support portion
82a: second wide part
82b: second narrow part
84: extending portion
84a: first wide part
84b: first narrow part
86: handle
100: button product manufacturing device

## Claims

1. A button member loading jig comprising:
an extending portion extending along a first direction; and
a plurality of support portions each protruding from the extending portion in a second direction intersecting the first direction, aligned at intervals between the plurality of support portions along the first direction, and configured to support a button member at the intervals.

2. The button member loading jig according to claim 1,
wherein the extending portion and the support portions are integrally formed of resin.

3. The button member loading jig according to claim 1,
wherein the extending portion includes:
a first wide part; and
a first narrow part having a width in a third direction smaller than a width of the first wide part, the third direction intersecting the first direction and the second direction.

4. The button member loading jig according to claim 3,
wherein a width of each of the support portions in the third direction is smaller than the width of the first wide part.

5. The button member loading jig according to claim 3,
wherein a width of each of the support portions in the third direction is equal to or smaller than the width of the first narrow part.

6. The button member loading jig according to claim 1,
wherein each of the support portions includes:
a second wide part; and
a second narrow part positioned farther from the extending portion than the second wide part in the second direction and having a width in a third direction smaller than a width of the second wide part, the third direction intersecting the first direction and the second direction.

7. The button member loading jig according to claim 1,
wherein the button member is filled into the intervals.

8. The button member loading jig according to claim 1, further comprising:
a handle protruding from the extending portion in the second direction,
wherein the extending portion is positioned between the support portions and the handle.

9. The button member loading jig according to claim 8,
wherein the button member includes a mounting surface on which a fastener is to be mounted,
a first portion and a second portion are mounted on the mounting surface, the first portion and the second portion being separated from each other by a predetermined length in a direction along the mounting surface, and
each of the support portions has a width in a third direction intersecting the first direction and the second direction that is equal to or smaller than the predetermined length, and is positioned between the first portion and the second portion.

10. The button member loading jig according to claim 1,
wherein the button member loading jig is a jig configured to load a plurality of the button members into a stocker in a button product manufacturing device for manufacturing a button product by using the button member,
wherein the stocker includes a cylindrical tubular body, and
a length of each of the support portions in the second direction is shorter than an inner diameter of the tubular body.

11. The button member loading jig according to claim 1,
wherein the button member loading jig is a jig configured to load a plurality of the button members into a stocker in a button product manufacturing device for manufacturing a button product by using the button member,
wherein the stocker includes a cylindrical tubular body, an opening provided at an upper end of the tubular body, and a slit extending from the opening along a central axis and formed in the tubular body, and
a width of each of the support portions in a third direction intersecting the first direction and the second direction is smaller than a width of the slit.

12. The button member loading jig according to claim 1,
wherein the button member loading jig is a jig configured to load a plurality of the button members into a stocker in a button product manufacturing device for manufacturing a button product by using the button member,
wherein the stocker includes a cylindrical tubular body, an opening provided at an upper end of the tubular body, and a slit extending from the opening along a central axis and formed in the tubular body, and
a width of the extending portion in a third direction intersecting the first direction and the second direction is smaller than a width of the slit.

13. A button member to be supported by the button member loading jig according to any one of claims 1 to 12,
wherein a thickness of the button member in the first direction is equal to or smaller than the intervals.

14. A button member unit to be supported by the button member loading jig according to any one of claims 1 to 12, the button member unit comprising:
the button member including a mounting surface on which a fastener is to be mounted;
a first portion and a second portion arranged apart from each other by a predetermined length in a direction along the mounting surface; and
a third portion provided at a position away from a center of the mounting surface to one side in an intersecting direction intersecting a direction from the first portion toward the second portion,
wherein the third portion intersects an extension line of an insertion path when each of the support portions is inserted between the first portion and the second portion.

15. A button member unit to be supported by the button member loading jig according to any one of claims 1 to 12, the button member unit comprising:
the button member including a mounting surface on which a fastener is to be mounted; and
a first portion and a second portion arranged apart from each other by a predetermined length in a direction along the mounting surface,
wherein the first portion sandwiches a center of the mounting surface with the second portion, and is closer to the center of the mounting surface than is the second portion.

16. A button member loading method for loading, by using the loading jig according to any one of claims 1 to 12, a plurality of the button members into a stocker in a button product manufacturing device for manufacturing a button product using a button member,
the stocker including a tubular body having a cylindrical shape, an opening provided at an upper end of the tubular body, and a slit extending from the opening along a central axis and formed in the tubular body,
the button member loading method comprising:
inserting the loading jig into the tubular body from the opening with one end of the extending portion in the first direction leading to bring the loading jig into a state where the button members supported by the support portions are positioned inside the tubular body and the extending portion is positioned outside the tubular body; and
moving the loading jig from the state such that the support portions face the outside of the tubular body through the slit, to take out the loading jig to the outside of the tubular body and leave the button members inside the tubular body.
